# EUROPEAN PATENT SPECIFICATION

(11) **EP 2 961 265 B1**
(45) Date of publication and mention of the grant of the patent: **28.11.2018**
(21) Application number: 14709768.7
(22) Date of filing: 26.02.2014
(51) Int. Cl.: A01K 1/01

(54) **A MANURE SCRAPING DEVICE**
DUNGSCHABER
RACLEUR DE FUMIER

(30) Priority: 01.03.2013 SE 1350244; 01.03.2013 US 201361771259 P
(43) Date of publication of application: 06.01.2016
(73) Proprietor: DeLaval Holding AB, 147 21 Tumba (SE)
(72) Inventor: STÅL, Adam, 147 21 Tumba (SE); VALLIERES, Eric, 147 21 Tumba (SE)
(74) Representative: Lilliehorn, Tobias
(86) International application number: PCT/SE2014/050234
(87) International publication number: WO 2014/133442

(56) References cited:
- DE-A1- 3 907 135
- FR-A1- 2 143 510
- FR-A1- 2 403 958
- FR-A1- 2 750 443
- NO-A- 800 666
- SU-A1- 540 612
- SU-A1- 540 612
- SU-A1- 694 148
- SU-A1- 954 071
- SU-A1- 1 055 440

## Description

### BACKGROUND OF THE INVENTION AND PRIOR ART

The present invention relates to a manure scraping device which comprises a first scraper and a drive mechanism adapted to drive the first scraper back and forth between a rear end of the alley and a front end of the alley, wherein the first scraper comprises at least one outer scraping portion which is movably arranged between an unfolded state, in which it is in contact with a side surface of the alley, and a folded state, in which a gap is formed between the scraping portion and the side surfaces of the alley, wherein said outer scraping portion is configured to move to the unfolded state when the scraper is driven in a forward direction towards the front end of the alley and to the folded state when the scraper is driven in a rearward direction towards the rear end of the alley, and wherein the outer scraping portion reaches the unfolded state when it has been driven from the rear end of the alley to a first position located at a distance from the rear end.

A cow friendly scraper may comprise at least one inner scraping portion and two pivotally arranged outer scraping portions. When such a scraper starts to drive from a rear end of an alley, the inner scraping portion is substantially immediately moved to an active scraping position. However, the outer scraping portions are to be angled out from a folded state to an unfolded state in which their free ends come in contact with a respective side surface of the alley. Only when the outer scraping portions have reached the unfolded state, the scraper extends over the whole width of the alley. Since the scraper has a smaller width than the alley until the outer scraping portions reach the unfolded state, manure will be left in two side areas of the alley in connection to the rear end. Since the scraper is not capable of cleaning these areas, the amount of manure in these areas will increase with time. The manure in these areas has to be manually removed.

FR2143510, DE3907135, SU540612 and NO800666 are examples of manure scraping devices having more than one scraper. FR 2403958 and FR 2750443 show another example of a manure scraper.

### SUMMARY OF THE INVENTION

The object of the present invention is to provide a manure scraping device comprising a first scraper of the initially mentioned kind which has capacity to clean all areas in an alley.

This object is obtained, according to the invention, by the feature that the manure scraping device comprises a second scraper configured to push manure forwardly from the rear end of the alley to a second position in the alley which is located at a longer distance from the rear end of the alley than said first position. The first scraper cleans the area of the alley from the first position to the front position completely. The second scraper cleans the area of the alley located between the rear end of the alley and the second position. The second scraper pushes the manure in this area to the second position, which is located in front of the first position, where the outer scraping portion of the first scraper has reached its unfolded state. Consequently, the second scraper moves manure from an area of the alley which is not completely cleaned by the first scraper to an area which is completely cleaned by the first scraper. Thus, a manure scraping device comprising such first and second scrapers has capacity to move all the manure in the alley to the front end to a cross channel for the manure. According to the invention, the second scraper is moved between the rear end and the second position by means of the same drive mechanism as the first scraper. In this case, there is no need for a separate drive mechanism for the second scraper. Such a manure scraping device may be given a simple construction.

According to the invention, the second scraper is pulled by the first scraper from the rear end of the alley to the second position. In this case, the second scraper is entrained behind the first scraper when it is moved from the rear end of the alley to the second position. The scrapers comprise a connection device configured to connect the second scraper to the first scraper such that the first scraper pulls the second scraper from the rear end of the alley to the second position. Such a connection may be automatically established when the first scraper comes in contact with the second scraper.
According to the invention, the manure scraping device comprises a disengaging member which is configured to release the connection device when the second scraper reaches the second position. Such a disengaging member may be a raised portion in the floor surface of the alley. The raised portion may have a contact surface designed to disengage the connection device. Since the second scraper has no separate drive mechanism, it stops in the second position.
According to an embodiment of the invention, the second scraper has a front surface configured to come in contact with manure when it moves from the rear end of the alley to the second position, wherein said front surface forms an angle with a floor surface of the alley in a vertical plane in the direction of the alley such that it is capable of moving the manure forwardly from the rear end of the alley to the second position. A second scraper comprising such a front surface will push the manure in front of it when it moves in a forward direction towards the second position. The front surface may be straight or curved. The vertical height of the front surface may be low since the second scraper only needs to clean a small area of the alley. The front surface of the second scraper may form an angle in the range of e.g. 60 to 120° with the floor surface in the alley. Preferably, it forms an angle of about 90° with the floor surface in the alley.

According to another embodiment of the invention, the second scraper has a rear surface configured to come in contact with manure when it moves from the second position to the rear end of the alley, wherein said rear surface forms an angle with the floor surface of the alley in a vertical plane in the direction of the alley such that the second scraper is capable of moving under the manure. A second scraper comprising such a rear surface will not push the manure in a rearward direction when it moves towards the rear end of the alley. The rear surface may be straight or curved. The rear surface should form an acute angle with the floor surface in the alley. Preferably, it forms an angle in the range of 5° to 45° with the floor surface. A second scraper with such front and rear surfaces may be given a simple construction and a reliable function.

According to another embodiment of the invention, the second scraper has an extension across the whole width of the alley. This means that it cleans the whole width of the alley between the rear end and the second position in the alley. Since the outer scraping portion only leaves manure in the side areas of the alley at the rear end, it is alternatively possible to use a second scraper only cleaning said side areas.

According to another embodiment of the invention, the second scraper is pushed by the first scraper from the second position to the rear end of the alley. In this case, the motion of the second scraper in the rearward direction from the second position to the rear end of the alley may be provided in a very simple manner. The first scraper may comprise a contact surface configured to come in contact with the second scraper and push it back to the rear end of the alley. Such a contact surface may be given a simple design.

According to another embodiment of the invention, the connection device comprises a first coupling member arranged in a central portion of the first scraper and a second coupling member arranged in a central portion of the second scraper. In this case, the scrapers comprise a centrally arranged connection device resulting in the second scraper being pushed and pulled by the first scraper in a stable manner.

According to another embodiment of the invention, the drive mechanism comprises an elongated drive rail in the alley which is provided with openings for engagement with a pivotally arranged pawl of the first scraper. Such a drive mechanism provides a reliable drive motion of the first scraper back and forth between a rear end and a front end of the alley. Alternatively, the first scraper may be moved by a drive cable connected to a centre portion of the first scraper.

According to another embodiment of the invention, the first scraper comprises two outer scraping portions which are pivotally arranged between the unfolded state, in which they are in contact with a respective side surface of alley, and a folded state, in which they are at a distance from said side surfaces. Preferably, the outer scraping portions have an equal design such that they reach the unfolded state in one and the same first position. Alternatively, the second scraper is driven to a second position located at a longer distance from the rear end than the first position for both outer scraping portions.

According to another embodiment of the invention, the first scraper comprises at least one inner scraping portion arranged between the two outer scraping portions. The inner scraping portion may be moved to an active scraping position at the rear end without any delay. Such an inner scraping portion is able to clean a centre longitudinal portion of the alley between the rear end and the front end of the alley. Preferably, the outer scrapers are longer than the inner scraper. Such a design of the first scraper is defined as cow friendly.

### BRIEF DESCRIPTION OF THE DRAWINGS

In the following, a preferred embodiment of the invention is described by examples and with references to the attached drawings, in which:
- Fig 1: shows a barn provided with a number alleys with manure scraping devices in the form of a first scraper and an second scraper according to the present invention,
- Fig 2: shows the first scraper in a first position in relation to the second scraper,
- Fig 3: shows a cross section view of the second scraper in Fig. 2 in a longitudinal vertical plane A-A,
- Fig 4: shows the first scraper in a second position in relation to the second scraper,
- Fig 5: shows the first scraper in a third position in relation to the second scraper,
- Fig 6: shows the first scraper in a fourth position in relation to the second scraper,
- Fig 7: shows the first scraper in a fifth position in relation to the second scraper and
- Fig 8a-d: shows a connection device between the first scraper and the second scraper during different states.

### BRIEF DESCRIPTION OF PREFERRED EMBODIMENTS OF THE INVENTION

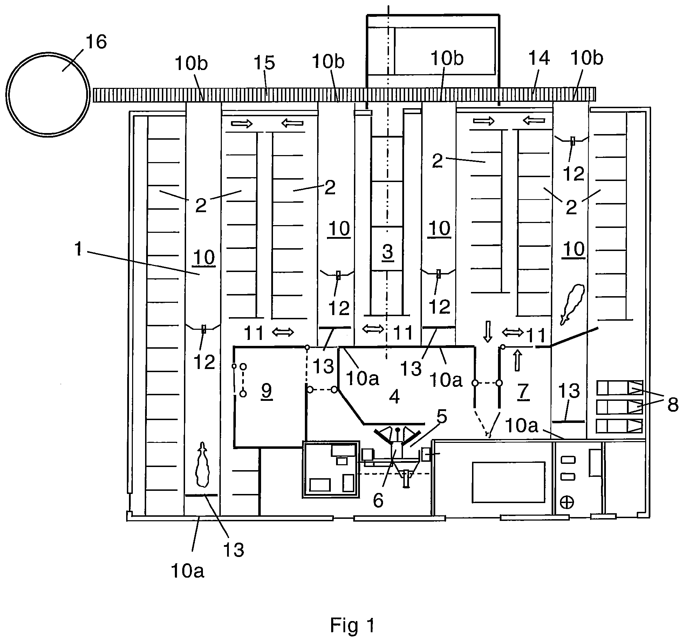

Fig 1 shows a barn for about 60 milking cows. In this case, the barn comprises a roughage feeding area 1 including resting areas 2 and an elongated feeding table 3 for the cows. The barn further comprises a milking area 4 provided with a voluntary milking station 5. A milking robot 6 attaches teat cups to the cows in the milking station 5. Furthermore, the barn comprises a concentrate feeding area 7, which is provided with concentrate feeding stations 8, and a separation and treatment area 9.

The roughage feeding area 1 constitutes the main part of the barn. The roughage feeding area 1 comprises four elongated alleys 10 for the cows. A row of cubicles including resting areas 2 is arranged along the sides of the alleys 10. The roughage feeding area 1 comprises passages 11 connecting the alleys 10. The passages 11 make it possible for the cows to walk substantially freely in the whole roughage feeding area 1. Each alley 10 comprises a manure scraping device in the form of a first scraper 12 and a second scraper 13. The first scrapers 12 move back and forth between a rear end 10a and a front end 10b of the alleys 10. The first scrapers 12 push the manure in the alleys 10 to a common cross channel 14 located at the front end 10b of the alleys 10. The manure transportation device 15 transports the manure in the common cross channel 14 to a storing space 16. The second scrapers 13 are arranged at the rear ends 10a of the alley 10. Each second scraper 13 is movably arranged in a relatively small area at the rear end 10a of the alley 10.

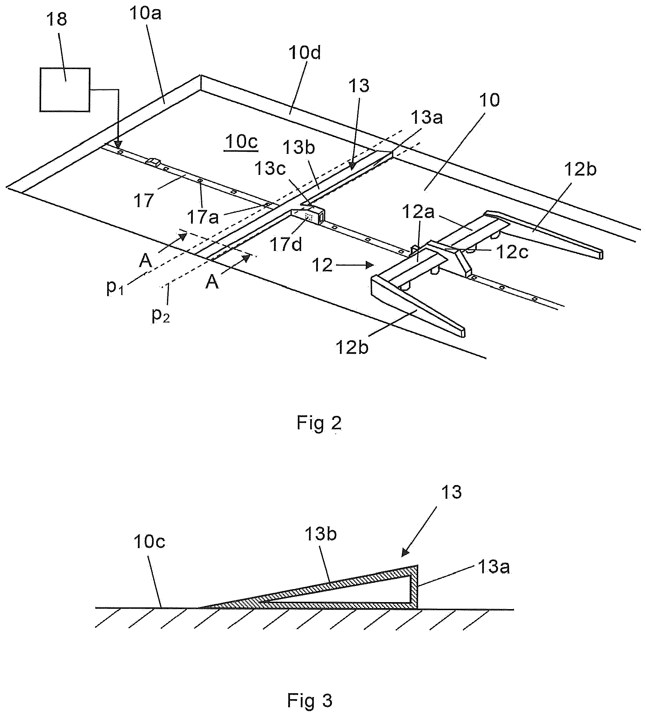

Fig 2 shows one of the first scrapers 12 when it moves towards a second scraper 13 in one of the alleys 10 in Fig. 1. The alley 10 is formed by a sunken floor surface 10c having an extension between the rear end 10a and the front end 10b of the alley. The rear end 10a of the alley 10 is formed by a vertical end surface having a vertical extension between the level of the sunken floor surface 10c and a surrounding floor surface. The alley 10 comprises vertical side surfaces 10d also having a vertical extension between the sunken floor surface 10c and a surrounding floor surface. In this case, the first scraper 12 comprises two inner scraping portions 12a and two outer scraping portions 12b. Each outer scraping portion 12b is pivotally connected to the closest located inner scraping portion 12a. The first scraper 12 comprises a centre portion 12c arranged between the inner scraping portions 12a.

The first scraper 12 is here driven in a rearward direction in the alley 10. The inner scraping portions 12a are in an inactive state, in which the scraping portions 12a have been raised to a position above the floor surface 10c in the alley 10 such that a vertical gap is created between the scraping portions 12a and the floor surface 10c in the alley 10. The outer scraping portions 12b are in a folded state, in which a gap is formed between the free ends of the outer scraping portions 12b and the vertical side surfaces 10d of the alley 10. When the first scraper 12 is driven in the rearward direction of the alley 10 any manure on the floor surface 10c will pass through these gaps.

The first scraper 12 is driven along the alley 10 by means of a drive rail 17 arranged in a centre position of the sunken floor surface 10c. A schematically disclosed power member 18 is adapted to provide a reciprocating motion of the drive rail 17. The power member 18 may be a hydraulic piston-cylinder. The drive rail 17 comprises openings 17a arranged at constant intervals at an upper surface of the drive rail 17. The centre portion 12c of the first scraper is arranged vertically above the drive rail 17. The centre portion 12c comprises a schematically shown pawl 12d which is pivotally arranged between a forward driving position and a rearward driving position. The pawl 12d is configured to get in engagement with the openings 17a of the drive rail 17 when it provides a reciprocating motion such that the first scraper 12 will be driven along the alley 10. A drive mechanism for a scraper in the form of a reciprocating drive rail 17 and a pawl 12d is conventional. For that reason, the drive mechanism is not described in more detail.

Fig. 3 shows a cross section view of the second scraper 13 in a vertical plane A-A in a longitudinal direction of the alley 10. The second scraper 13 comprises a straight front surface 13a forming a substantially right angle with to the floor surface 10c in the alley 10. Such a front surface 13a pushes the manure forwardly when the second scraper 13 is moved in a forward direction on the floor surface 10c. The second scraper 13 comprises a straight rear surface 13b forming an acute angle with the floor surface 10c. When the second scraper 13 hits manure on the floor surface, the inclined rear surface 13b will lift the manure upwardly from the floor surface 10 such that the second scraper 13 is able to pass under the manure. Thus, the second scraper 13 will not push the manure in a rearward direction towards the rear end 10a of the alley.

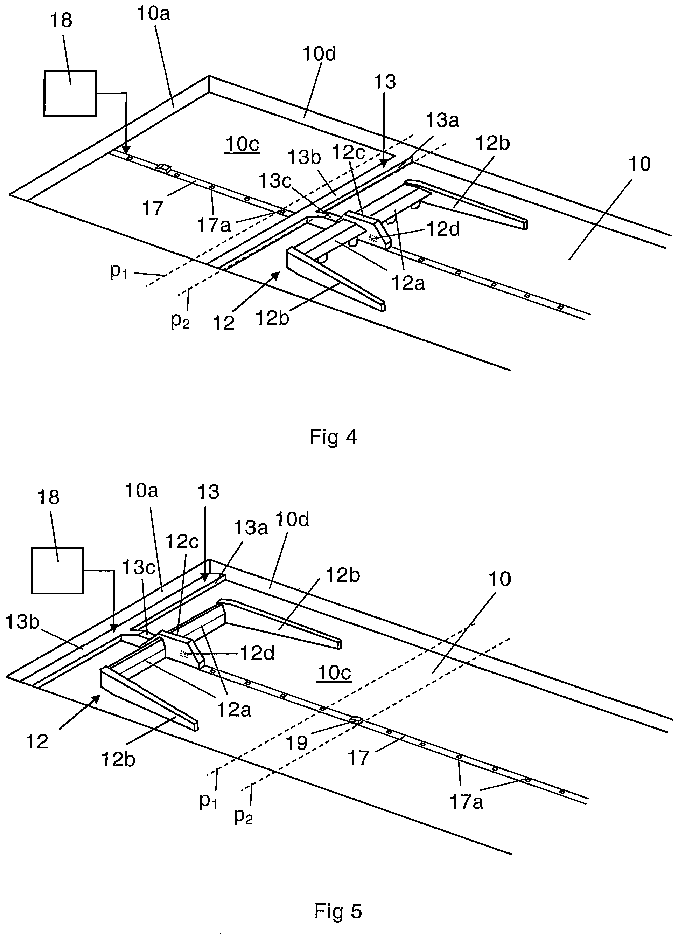

Fig. 4 shows the first scraper 12 when its center portion 12c has made contact with the center portion 13c of the second scraper 13. During the further motion of the first scraper 12 towards the rear end 10a of the moving area 10, the first scraper 12 performs a pushing motion on the second scraper 13 such that the first scraper 12 and the second scraper 13 are driven together to the rear end 10a of the alley 10. During this motion of the second scraper 13, the rear surface 13b of the second scraper 13 allows any manure on the floor surface 10c to pass over the second scraper 13. Thus, both the first scraper 12 and the second scraper 13 are able to pass through manure on the floor surface 10c.

Fig. 5 shows the first scraper 12 and the second scraper 13 when they have arrived to the rear end 10a of the alley 10. In this position, the pawl 12d is automatically switched to the forward driving position. The scrapers 12 and 13 comprise a coupling member configured to connect the second scraper 13 and the first scraper 12 to each other at least when they have reached the rear end 10a of the alley 10. Thus, when the first scraper 12 starts to be driven forwardly from the rear end 10a of the alley 10, the second scraper 13 follows behind. The inner scraping portions 12a of the first scraper 12 are automatically moved downwardly such they substantially immediately come in contact with the floor surface 10c. The side portions 12b of the first scraper 12 are automatically angled outwardly to an unfolded state in which their free ends come in contact with the vertical side surfaces 10d of the alley 10.

However, it takes some time for the outer scraping portions 12b to be angled outwardly to the unfolded state. The free ends of the outer scraping portions 12b come in contact the vertical side surfaces 10d of the alley 10 in the first position p₁. The first position p₁ may be at a distance of e.g. 1 to 3 meters from the rear end 10a of the alley 10. Thus, the side portions of the area between the rear end 10a of the alley 10 and the first position p₁ will not be cleaned by the first scraper 12. However, the second scraper 13, which moves behind the first scraper 12, takes care of the manure in this area of the floor surface 10c and moves it forwardly. The drive rail 17 comprises a raised portion 19. The raised portion 19 is configured to disconnect the connection device between the scrapers 12, 13 when the second scraper 13 has reached a second position p₂.

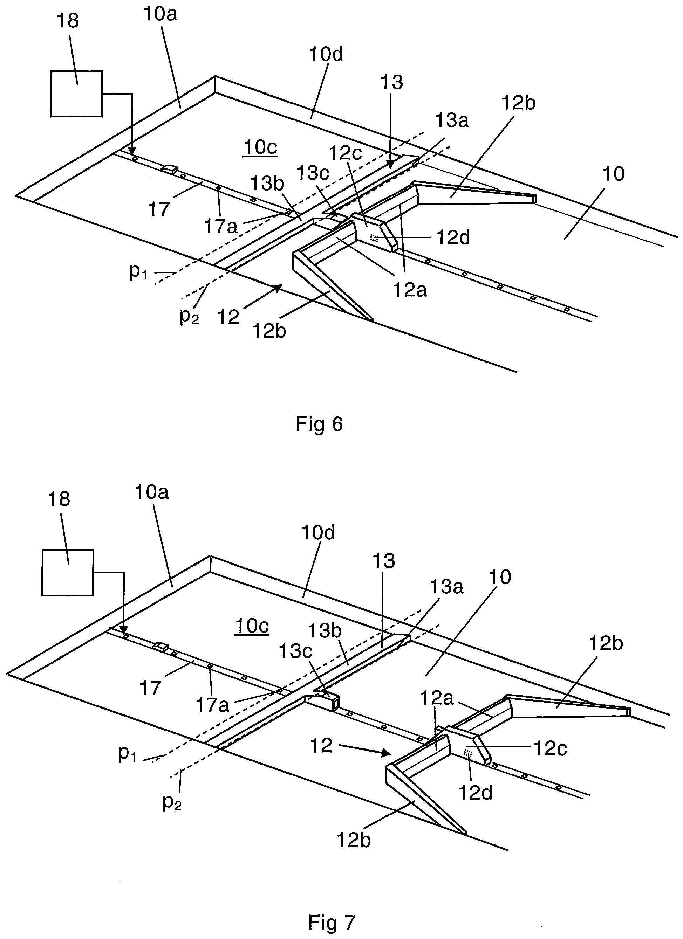

Fig. 6 shows the scrapers 12, 13 when the second scraper 13 has reached the second position p₂. The outer scraping portions 12b have already been moved to the unfolded state, since the first position p₁ is located at a smaller distance from the rear end 10a of the alley 10 than the second position p₂. The raised portion 19 disconnects the second scraper 13 from the first scraper 12 such that the second scraper 13 is stopped in the second position p₂. Thus, the second scraper 13 moves the manure to the second position p₂ on the floor surface 10c. Since the second position p₂ is located at a longer distance from the rear end 10a of the alley 10 than the first position p₁, the manure moved to the second position p₂ by the second scraper 13 will be moved forwardly to the front end 10b of the alley 10 and to the cross channel 14 the next time the first scraper 12 moves past the second position p₂.

Fig. 7 shows the scrapers 12, 13 when the first scraper 12 has left the second scraper 13 in the second position p₂. The first scraper 12 moves forwardly in the alley 10 and pushes all manure located on the floor surface 10c to the front end 10b and into the cross channel 14. The first scraper 12 is automatically stopped at the front end 10b of the alley 10. The pawl is changed to the rearward driving position and the first scraper 12 starts to move in a rearward direction in the alley 10. The inner scraping portions 12a are raised to the inactive upper position in which a vertical gap is formed between the inner scraping portions 12a and the floor surface 10c. The outer scraping portions 12b angles inwardly to the folded state such that a gap is formed between the free ends of the outer scraping portions 12b and the side edges 10d of the floor surface 10c.

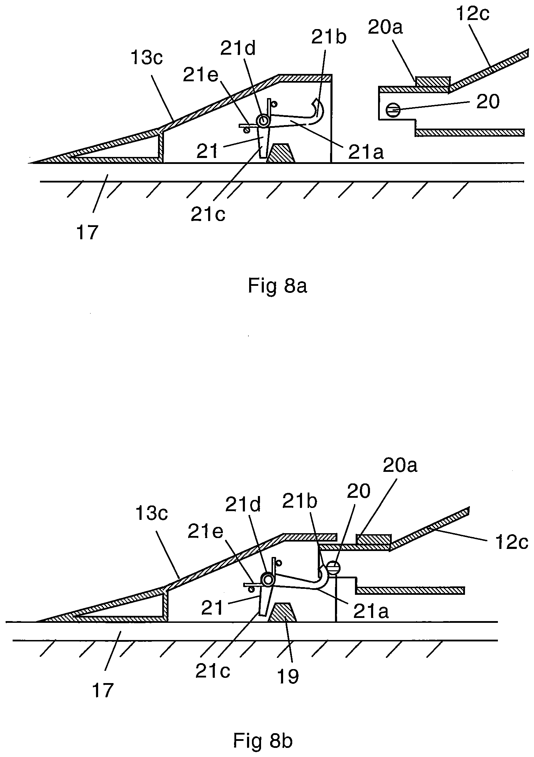

Fig. 8a-d shows an embodiment of the above mentioned coupling device. A rear part of the centre portion 12c of the first scraper 12 is shown in the figures. The centre portion 12c of the first scraper 12 comprises an opening to an inner space in which a coupling member in the form of a transverse pin 20 is arranged. The center portion 12c of the first scraper 12 also comprises a contact surface 20a configured to come in contact with a contact surface of the centre portion 13c of the second scraper 13. The centre portion 13c of the second scraper 13 comprises an opening to an inner space at a front end provided with a coupling member in the form of a pivoted body 21. The pivoted body 21 has a first arm 21a with a hooked portion 21b at an outer end. The pivoted body 21 has a second arm 21c forming an angle of about 90° with the first arm 21a. The pivoted body 21 is pivotally arranged around a transverse shaft 21d. The pivoted body 21 is held in an initial position by means of at least one spring member 21e. The spring 20e allows a pivot motion of the pivot body 21 around the transverse shaft 21d in a clockwise direction and in a counter clockwise direction from the initial position against the force of the spring member 21e.

Fig. 8a shows the centre portion 12c of the first scraper 12 when it approaches the centre portion 13c of the second scraper 13 which is in the second position p₂ in the alley 10. The transverse pin 20 of the first scraper 12 is at substantially the same level as the hooked portion 21b of the second scraper 13. Fig 8b shows when the transverse pin 20 of the first scraper 12 hits the hooked portion 21b of the second scraper 13.The transverse pin 20 presses the hook portion 21b downwardly such that the pivot body 21 pivots in a clockwise direction around the transverse shaft 21d. Thereby, it is possible for the pin 20 to pass beyond the hooked portion 21b. When the transverse pin 20 has passed beyond the hook portion 21b, the pivot body 21 pivots back to its initial position by means of the spring member 21e. The contact portion 20a of the first scraper 12 comes in contact with a contact surface of the centre portion 13c of the second scraper 13. During the following motion of the first scraper 12, the first scraper 12 pushes the second scraper back to the rear end 10a of the alley 10.

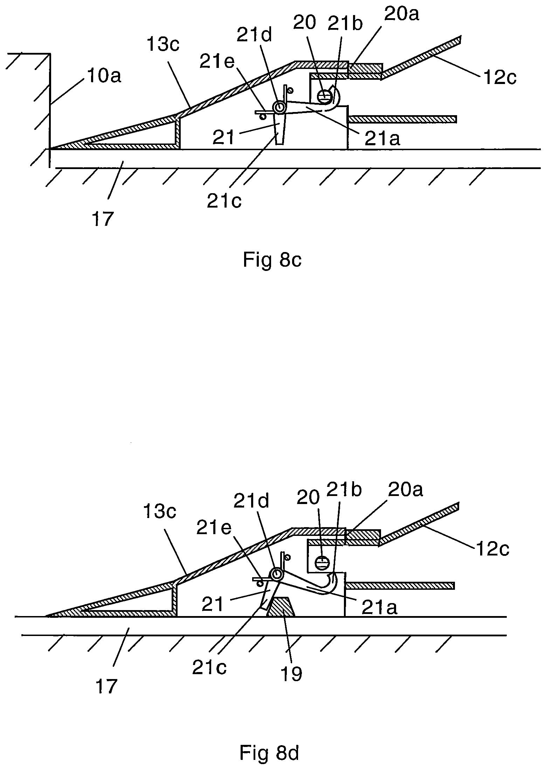

Fig. 8c shows the centre part 13c of the second scraper 13 and the centre part 12c of the first scraper 12 at the rear end 10a of the alley 10. It is here visible that the hooked portion 21b has pivoted back to the initial position by means of the spring member 21e such that it has come into engagement with the transverse pin 20 of the first scraper 12. When the first scraper 12 starts to drive forwardly from the rear end 10a of the alley 10, the first scraper 12 entrains the second scraper 13. The second scraper 13 is entrained until it reaches the raised portion 19 in the second position p₂. The second arm 21c of the pivot body 21 hits the raised portion 19. The raised portion 19 turns the pivot body 21 in a clockwise direction, which is shown in Fig. 8d. The hooked portion 21b gets out of engagement with the transverse pin 20 such that the first scraper 12 will be released from the second scraper 13. The second scraper 13 stops in the second position p₂ while the first scraper continues to be driven forwardly towards the front end 10a of alley 10.

The invention is not limited to the described embodiments but may be varied and modified freely within the scope of the claims. An arbitrary coupling device may, for example, be used having the above described function. Thus, the coupling device is not restricted to be of the kind shown in Fig. 8a-d.

## Claims

1. A manure scraping device which comprises a first scraper (12) and a drive mechanism (17, 18) adapted to drive the first scraper (12) back and forth between a rear end (10a) of the alley (10) and a front end (10b) of the alley (10), wherein the first scraper (12) comprises at least one outer scraping portion (12b) which is movably arranged between an unfolded state, in which it is in contact with a side surface (10d) of the alley (10), and a folded state, in which a gap is formed between the scraping portion (12b) and the side surfaces (10d) of the alley (10), wherein said outer scraping portion (12b) is configured to move to the unfolded state when the scraper (12) is driven in a forward direction towards the front end (10b) of the alley (10) and to the folded state when the scraper (12) is driven in a rearward direction towards the rear end (10a) of the alley (10), wherein the outer scraping portion (12b) reaches the unfolded state when it has been driven from the rear end (10a) of the alley (10) to a first position (p₁) located at a distance from the rear end (10a) of the alley (10), wherein the manure scraping device comprises a second scraper (13) configured to move and push manure in a forward direction from the rear end (10a) of the alley (10) to a second position (p₂) in the alley (10) which is located a longer distance from the rear end (10a) of the alley (10) than said first position (p₁), wherein the second scraper (13) is moved between the rear end (10a) and the second position (p₂) by means of the same drive mechanism (17, 18) as the first scraper (12), **characterized in that** the second scraper (13) is pulled by the first scraper (12) from the rear end (10a) of the alley (10) to the second position (p₂), wherein the second scraper (13) and the first scraper (12) comprises a connection device (20, 21) configured to connect the second scraper (13) to the first scraper (12) such that the first scraper (12) pulls the second scraper from the rear end (10a) of the alley (10) to the second position (p₂), and whererin the manure scraping device comprises a disengaging member (19) which is configured to release the connection device (20, 21) when the second scraper (13) reaches the second position (p₂).

2. A manure scraping device according to claim 1, **characterized in that** the second scraper (13) has a front surface (13a) configured to come in contact with manure when it moves from the rear end (10a) of the alley (10) to the second position (p₂), wherein said front surface (13a) forms an angle with a floor surface (10d) of the alley (10) in a vertical plane in the direction of the alley (10) such that it is capable of moving the manure forwardly from the rear end (10a) of the alley (10) to the second position (p₂).

3. A manure scraping device according to claim 2, **characterized in that** the front surface (13a) of the second scraper (13) forms an angle in the range of 60 to 120° with the floor surface (10d).

4. A manure scraping device according to any one of the preceding claims, **characterized in that** the second scraper (13) has a rear surface (13b) configured to come in contact with manure when it moves from the second position (p₂) to the rear end (10a) of the alley (10), wherein said rear surface (13b) forms an angle with the floor surface (10c) of the alley (10) in a vertical plane in the direction of the alley (10) such that the second scraper (13) is capable of moving under the manure.

5. A manure scraping device according to claim 4, **characterized in that** the rear surface (13b) of the second scraper (13) forms an angle in the range of 5° to 45° with the floor surface (10c).

6. A manure scraping device according to any one of the preceding claims, **characterized in that** the second scraper (13) has an extension across the whole width of the alley (10).

7. A manure scraping device according to any one of the preceding claims, **characterized in that** the second scraper (13) is pushed by the first scraper (12) from the second position (p₂) to the rear end (10a) of the alley (10).

8. A manure scraping device according to claim 7, **characterized in that** the first scraper (12) comprises a contact surface (20a) configured to come in contact with the second scraper (13) and push it back to the rear end (10a) of the alley (10).

9. A manure scraping device according to any one of the preceding claims, **characterized in that** connection device comprises a first coupling member (20) arranged in a central portion (12c) of the first scraper (12) and a second coupling member (21) arranged in a central portion (13c) of the second scraper (13).

10. A manure scraping device according to any one of the preceding claims, **characterized in that** the drive mechanism comprises an elongated drive rail (17) in the alley (10) which is provided with openings (17a) for engagement by a pivotally arranged pawl (12d) of the first scraper (12).

11. A manure scraping device according to any one of the preceding claims, **characterized in that** the first scraper (12) comprises two outer scraping portions (12b) which each is pivotally arranged between the unfolded state and a folded state.

12. A manure scraping device according to claim 11, **characterized in that** the first scraper (12) comprises at least one inner scraping portion (12a) arranged between the two outer scraping portions (12b).

## Patentansprüche

1. Dung-Schabe-Vorrichtung, die eine erste Rakel (12) und einen Antriebsmechanismus (17, 18) umfasst, der geeignet ist, die erste Rakel (12) zwischen einem hinterem Ende (10a) der Bahn (10) und einem vorderen Ende (10b) der Bahn (10) vor- und zurückzubewegen, wobei die erste Rakel (12) mindestens einen äußeren Schababschnitt (12b) umfasst, der zwischen einem entfalteten Zustand, in dem er mit einer Seitenfläche (10d) der Bahn (10) in Kontakt steht, und einem zusammengefalteten Zustand, in dem eine Lücke zwischen dem Schababschnitt (12b) und den Seitenflächen (10d) der Bahn (10) ausgebildet ist, beweglich angeordnet ist,
wobei der äußere Schababschnitt (12b) ausgestaltet ist, sich in den entfalteten Zustand zu bewegen, wenn die Rakel (12) in eine Vorwärtsrichtung hin zum vorderen Ende (10b) der Bahn (10) gefahren wird, und in den zusammengefalteten Zustand, wenn die Rakel (12) in eine Rückwärtsrichtung hin zum hinteren Ende (10a) der Bahn (10) gefahren wird,
wobei der äußere Schababschnitt (12b) den entfalteten Zustand erreicht, wenn er von dem hinteren Ende (10a) der Bahn (10) in eine erste Position (p₁) gefahren wurde, die in einem Abstand von dem hinteren Ende (10a) der Bahn (10) entfernt liegt,
wobei die Dung-Schabe-Vorrichtung eine zweite Rakel (13) umfasst, die ausgestaltet ist, Dung zu bewegen und in eine Vorwärtsrichtung von dem hinteren Ende (10a) der Bahn (10) in eine zweite Position (p₂) der Bahn (10) zu schieben, die in einem größeren Abstand von dem hinteren Ende (10a) der Bahn (10) entfernt liegt als die erste Position (p₁),
wobei die zweite Rakel (13) zwischen dem hinteren Ende (10a) und der zweiten Position (p2) mittels desselben Antriebsmechanismus' (17, 18) wie die erste Rakel (12) bewegt wird,
**dadurch gekennzeichnet, dass** die zweite Rakel (13) von der ersten Rakel (12) von dem hinteren Ende (10a) der Bahn (10) in die zweite Position (p₂) gezogen wird,
wobei die zweite Rakel (13) und die erste Rakel (12) eine Verbindungsvorrichtung (20, 21) umfassen, die ausgestaltet ist, die zweite Rakel (13) mit der ersten Rakel (12) zu verbinden, so dass die erste Rakel (12) die zweite Rakel (13) von dem hinteren Ende (10a) der Bahn (10) in die zweite Position (p₂) zieht, und
wobei die Dung-Schabe-Vorrichtung ein entkoppelbares Element (19) umfasst, das ausgestaltet ist, die Verbindungsvorrichtung (20, 21) freizugeben, wenn die zweite Rakel (13) die zweite Position (p₂) erreicht.

2. Dung-Schabe-Vorrichtung nach Anspruch 1, **dadurch gekennzeichnet, dass** die zweite Rakel (13) eine Vorderfläche (13a) aufweist, die ausgestaltet ist, mit Dung in Kontakt zu kommen, wenn sie sich von dem hinteren Ende (10a) der Bahn (10) in die zweite Position (p₂) bewegt, wobei die Vorderfläche (13a) einen Winkel mit einer Bodenfläche (10d) der Bahn (10) in einer vertikalen Ebene in die Richtung der Bahn (10) bildet, so dass sie den Dung von dem hinteren Ende (10a) der Bahn (10) in die zweite Position (p₂) vorwärts bewegen kann.

3. Dung-Schabe-Vorrichtung nach Anspruch 2, **dadurch gekennzeichnet, dass** die Vorderfläche (13a) der zweiten Rakel (13) einen Winkel zwischen 60 und 120° mit der Bodenfläche (10d) bildet.

4. Dung-Schabe-Vorrichtung nach einem der vorhergehenden Ansprüche, **dadurch gekennzeichnet, dass** die zweite Rakel (13) eine hintere Fläche (13b) aufweist, die ausgestaltet ist, mit Dung in Kontakt zu kommen, wenn sie sich von der zweiten Position (p₂) zu dem hinteren Ende (10a) der Bahn (10) bewegt, wobei die hintere Fläche (13b) einen Winkel mit der Bodenfläche (10c) der Bahn (10) in einer vertikalen Ebene in der Richtung der Bahn (10) bildet, so dass die zweite Rakel (13) sich unter dem Dung bewegen kann.

5. Dung-Schabe-Vorrichtung nach Anspruch 4, **dadurch gekennzeichnet, dass** die hintere Fläche (13b) der zweiten Rakel (13) einen Winkel zwischen 5° und 45° mit der Bodenfläche (10c) bildet.

6. Dung-Schabe-Vorrichtung nach einem der vorhergehenden Ansprüche, **dadurch gekennzeichnet, dass** die zweite Rakel (13) eine Ausdehnung über die gesamte Breite der Bahn (10) aufweist.

7. Dung-Schabe-Vorrichtung nach einem der vorhergehenden Ansprüche, **dadurch gekennzeichnet, dass** die zweite Rakel (13) von der ersten Rakel (12) aus der zweiten Position (p₂) zu dem hinteren Ende (10a) der Bahn (10) geschoben wird.

8. Dung-Schabe-Vorrichtung nach Anspruch 7, **dadurch gekennzeichnet, dass** die erste Rakel (12) eine Kontaktfläche (20a) umfasst, die ausgestaltet ist, in Kontakt mit der zweiten Rakel (13) zu kommen und sie zurück zu dem hinteren Ende (10a) der Bahn (10) zu schieben.

9. Dung-Schabe-Vorrichtung nach einem der vorhergehenden Ansprüche, **dadurch gekennzeichnet, dass** die Verbindungsvorrichtung ein erstes Kopplungselement (20), das an einem mittleren Abschnitt (12c) der ersten Rakel (12) angeordnet ist, und ein zweites Kopplungselement (21), das an einem mittleren Abschnitt (13c) der zweiten Rakel (13) angeordnet ist, umfasst.

10. Dung-Schabe-Vorrichtung nach einem der vorhergehenden Ansprüche, **dadurch gekennzeichnet, dass** der Antriebsmechanismus eine längliche Antriebsschiene (17) in der Bahn (10) umfasst, die mit Öffnungen (17a) zum Eingriff durch eine zentral angeordnete Klinke (12d) der ersten Rakel (12) vorgesehen ist.

11. Dung-Schabe-Vorrichtung nach einem der vorhergehenden Ansprüche, **dadurch gekennzeichnet, dass** die erste Rakel (12) zwei äußere Schababschnitte (12b) umfasst, von denen jeder zwischen dem entfalteten Zustand und einem zusammengefalteten Zustand angeordnet ist.

12. Dung-Schabe-Vorrichtung nach Anspruch 11, **dadurch gekennzeichnet, dass** die erste Rakel (12) mindestens einen inneren Schababschnitt (12a) umfasst, der zwischen den zwei äußeren Schababschnitten (12b) angeordnet ist.

## Revendications

1. Racleur de fumier qui comprend un premier racleur (12) et un mécanisme d'entraînement (17, 18) conçu pour entraîner le premier racleur (12) en va-et-vient entre une extrémité arrière (10a) du passage (10) et une extrémité avant (10b) du passage (10), le premier racleur (12) comprenant au moins une partie extérieure de raclage (12b), qui est disposée de manière mobile entre un état non plié, dans lequel il est en contact avec une surface latérale (10d) du passage (10), et un état plié, dans lequel un intervalle se forme entre la partie de raclage (12b) et les surfaces latérales (10d) du passage (10), ladite partie extérieure de raclage (12b) étant conçue pour se déplacer dans l'état non plié quand le racleur (12) est entraîné dans un sens d'avancée vers l'extrémité avant (10b) du passage (10) et dans l'état plié quand le racleur (12) est entraîné dans un sens de recul vers l'extrémité arrière (10a) du passage (10), la partie extérieure de raclage (12b) atteignant l'état non plié quand il a été entraîné de l'extrémité arrière (10a) du passage (10) à une première position (p₁) située à une certaine distance de l'extrémité arrière (10a) du passage (10), le racleur de fumier comprenant un second racleur (13) conçu pour se déplacer et pour pousser le fumier dans un sens d'avancée de l'extrémité arrière (10a) du passage (10) à une seconde position (p₂) dans le passage (10) qui se trouve à une plus grande distance de l'extrémité arrière (10a) du passage (10) que ladite première position (p₁), le second racleur (13) étant déplacé entre l'extrémité arrière (10a) et la seconde position (p₂) au moyen du même mécanisme d'entraînement (17, 18) que le premier racleur (12), **caractérisé en ce que** le second racleur (13) est tiré par le premier racleur (12) de l'extrémité arrière (10a) du passage (10) à la seconde position (p₂), le second racleur (13) et le premier racleur (12) comprenant un dispositif de liaison (20, 21) conçu pour relier le second racleur (13) au premier racleur (12) de sorte que le premier racleur (12) tire le second racleur de l'extrémité arrière (10a) du passage (10) à la seconde position (p2), et le racleur de fumier comprenant un élément de dégagement (19) qui est conçu pour libérer le dispositif de liaison (20, 21) quand le second racleur (13) atteint la seconde position (p₂).

2. Racleur de fumier selon la revendication 1, **caractérisé en ce que** le second racleur (13) présente une surface frontale (13a) conçue pour venir en contact avec le fumier quand il se déplace de l'extrémité arrière (10a) du passage (10) à la seconde position (p₂), ladite surface frontale (13a) formant un certain angle avec une surface de plancher (10d) du passage (10) dans un plan vertical dans le sens du passage (10), de sorte qu'il est à même de déplacer le fumier vers l'avant de l'extrémité arrière (10a) du passage (10) à la seconde position (p₂).

3. Racleur de fumier selon la revendication 2, **caractérisé en ce que** la surface frontale (13a) du second racleur (13) forme un angle compris entre 60 et 120° par rapport à la surface de plancher (10d).

4. Racleur de fumier selon l'une quelconque des revendications précédentes, **caractérisé en ce que** le second racleur (13) présente une surface arrière (13b) conçue pour venir en contact avec le fumier quand il se déplace de la seconde position (p₂) à l'extrémité arrière (10a) du passage (10), ladite surface arrière (13b) formant un angle avec la surface de plancher (10c) du passage (10) dans un plan vertical dans le sens du passage (10) de sorte que le second racleur (13) est à même de se déplacer sous le fumier.

5. Racleur de fumier selon la revendication 4, **caractérisé en ce que** la surface arrière (13b) du second racleur (13) forme un angle compris entre 5° et 45° avec la surface de plancher (10c).

6. Racleur de fumier selon l'une quelconque des revendications précédentes, **caractérisé en ce que** le second racleur (13) présente une extension à travers toute la largeur du passage (10).

7. Racleur de fumier selon l'une quelconque des revendications précédentes, **caractérisé en ce que** le second racleur (13) est poussé par le premier racleur (12) de la seconde position (p₂) à l'extrémité arrière (10a) du passage (10).

8. Racleur de fumier selon la revendication 7, **caractérisé en ce que** le premier racleur (12) comprend une surface de contact (20a) conçue pour venir en contact avec le second racleur (13) et pour la repousser vers l'extrémité arrière (10a) du passage (10).

9. Racleur de fumier selon l'une quelconque des revendications précédentes, **caractérisé en ce que** le dispositif de liaison comprend un premier élément d'accouplement (20) disposé dans une partie centrale (12c) du premier racleur (12) et un second élément d'accouplement (21) disposé dans une partie centrale (13c) du second racleur (13).

10. Racleur de fumier selon l'une quelconque des revendications précédentes, **caractérisé en ce que** le mécanisme d'entraînement comprend un rail allongé d'entraînement (17) dans le passage (10) qui est pourvu d'ouvertures (17a) permettant un engrènement par un cliquet agencé à pivotement (12d) du premier racleur (12).

11. Racleur de fumier selon l'une quelconque des revendications précédentes, **caractérisé en ce que** le premier racleur (12) comprend deux parties extérieures de raclage (12b) qui sont chacune agencées à pivotement entre l'état non plié et un état plié.

12. Racleur de fumier selon la revendication 11, **caractérisé en ce que** le premier racleur (12) comprend au moins une partie intérieure de raclage (12a) disposée entre les deux parties extérieures de raclage (12b).
